(19) Europäisches Patentamt
European Patent Office
Office européen des brevets

(11) **EP 4 254 541 A1**

(12) **EUROPEAN PATENT APPLICATION**
published in accordance with Art. 153(4) EPC

(43) Date of publication:
**04.10.2023 Bulletin 2023/40**

(21) Application number: **21897770.0**

(22) Date of filing: **15.11.2021**

(51) International Patent Classification (IPC):
**H01M 4/13** (2010.01)

(52) Cooperative Patent Classification (CPC):
**H01M 4/13;** Y02E 60/10

(86) International application number:
**PCT/JP2021/041885**

(87) International publication number:
**WO 2022/113796 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.11.2020   JP 2020194649**

(71) Applicant: **Panasonic Energy Co., Ltd.
Moriguchi-shi, Osaka, 570-8511 (JP)**

(72) Inventors:
• **IKEDA, Tomoki
Kadoma-shi, Osaka 571-0057 (JP)**
• **SAKITANI, Nobuhiro
Kadoma-shi, Osaka 571-0057 (JP)**

(74) Representative: **Novagraaf International SA
Chemin de l'Echo 3
1213 Onex, Geneva (CH)**

(54) **POSITIVE ELECTRODE FOR NON-AQUEOUS ELECTROLYTE SECONDARY BATTERY AND NON-AQUEOUS ELECTROLYTE SECONDARY BATTERY**

(57)    A positive electrode (11) for a non-aqueous electrolyte secondary battery comprises a positive electrode current collector (40) and a positive electrode mixture layer (42) that is disposed on the positive electrode current collector (40) and includes a positive electrode active substance. The quantity of dibutyl phthalate oil absorbed by the positive electrode active substance included in a lower-half region (42a) of the positive electrode mixture layer (42) which is on the positive electrode current collector (40) side, when the positive electrode mixture layer (42) is divided in the thickness direction into two equal parts, is less than the quantity of dibutyl phthalate oil absorbed by the positive electrode active substance included in an upper-half region (42b) which is on the surface side; the quantity of dibutyl phthalate oil absorbed by the positive electrode active substance included in the lower-half region (42a) is at least 11 mL/100 g and no more than 19 mL/100 g; and the quantity of dibutyl phthalate oil absorbed by the positive electrode active substance included in the upper-half region (42b) is at least 15 mL/100 g and no more than 23 mL/100 g.

## Figure 2

**Description**

TECHNICAL FIELD

The present disclosure relates to a positive electrode for a non-aqueous electrolyte secondary battery, and a non-aqueous electrolyte secondary battery.

BACKGROUND

In recent years, as a secondary battery having a high output and a high energy density, a non-aqueous electrolyte secondary battery which includes a positive electrode, a negative electrode, and a non-aqueous electrolyte and performs charge and discharge by moving lithium ions and the like between the positive electrode and the negative electrode is widely used.

For example, in order to provide a non-aqueous electrolytic secondary battery having both excellent output characteristics and good charge-discharge cycle characteristics, Patent Literature 1 proposes use of a positive electrode including: a positive electrode current collector; and a positive electrode active material layer, wherein the positive electrode active material layer includes two layers divided in the thickness direction, the two layers being composed of an upper layer relatively close to the surface of the positive electrode active material layer and a lower layer relatively close to the positive electrode current collector, the dibutyl phthalate oil absorption per unit mass of the lower layer is larger than the dibutyl phthalate oil absorption per unit mass of the upper layer, and the thickness of the lower layer is less than or equal to 40% when the thickness of the entire positive electrode active material layer is 100%.

In addition, for example, Patent Literature 2 proposes a positive electrode active material including a powder of a lithium-containing composite oxide and having a dibutyl phthalate oil absorption of 20 mL/100 g to 40 mL/100 g.

CITATION LIST

PATENT LITERATURE

Patent Literature 1: JP 2016-100241 A
Patent Literature 2: JP 2005-515465 A

SUMMARY

TECHNICAL PROBLEM

An object of the present disclosure is to provide a positive electrode for a non-aqueous electrolyte secondary battery capable of improving discharge rate characteristics and charge-discharge cycle characteristics, and a non-aqueous electrolyte secondary battery including the positive electrode for a non-aqueous electrolyte secondary battery.

SOLUTION TO PROBLEM

A positive electrode for a non-aqueous electrolyte secondary battery according to one aspect of the present disclosure includes: a positive electrode current collector; and a positive electrode mixture layer provided on the positive electrode current collector and containing a positive electrode active material, wherein when the positive electrode mixture layer is divided into two equal parts in a thickness direction of the positive electrode mixture layer, a dibutyl phthalate oil absorption of the positive electrode active material contained in a lower half region on a side of the positive electrode current collector is smaller than a dibutyl phthalate oil absorption of the positive electrode active material contained in an upper half region on a surface side of the positive electrode mixture layer, the dibutyl phthalate oil absorption of the positive electrode active material contained in the lower half region is greater than or equal to 11 mL/100 g and less than or equal to 19 mL/100 g, and the dibutyl phthalate oil absorption of the positive electrode active material contained in the upper half region is greater than or equal to 15 mL/100 g and less than or equal to 23 mL/100 g.

Further, a non-aqueous electrolyte secondary battery according to one aspect of the present disclosure includes: a positive electrode; a negative electrode; and a non-aqueous electrolyte, wherein the positive electrode is the positive electrode for a non-aqueous electrolyte secondary battery.

ADVANTAGEOUS EFFECTS OF INVENTION

According to one aspect of the present disclosure, discharge rate characteristics and charge-discharge cycle characteristics can be improved.

BRIEF DESCRIPTION OF DRAWINGS

FIG. 1 is a cross-sectional view of a non-aqueous electrolyte secondary battery as an example of an embodiment.
FIG. 2 is a cross-sectional view of a positive electrode which is an example of the embodiment.

DESCRIPTION OF EMBODIMENTS

An example of the embodiment will be described with reference to the drawings. The non-aqueous electrolyte secondary battery of the present disclosure is not limited to the embodiment described below. The drawings referred to in the description of the embodiment are schematically illustrated.

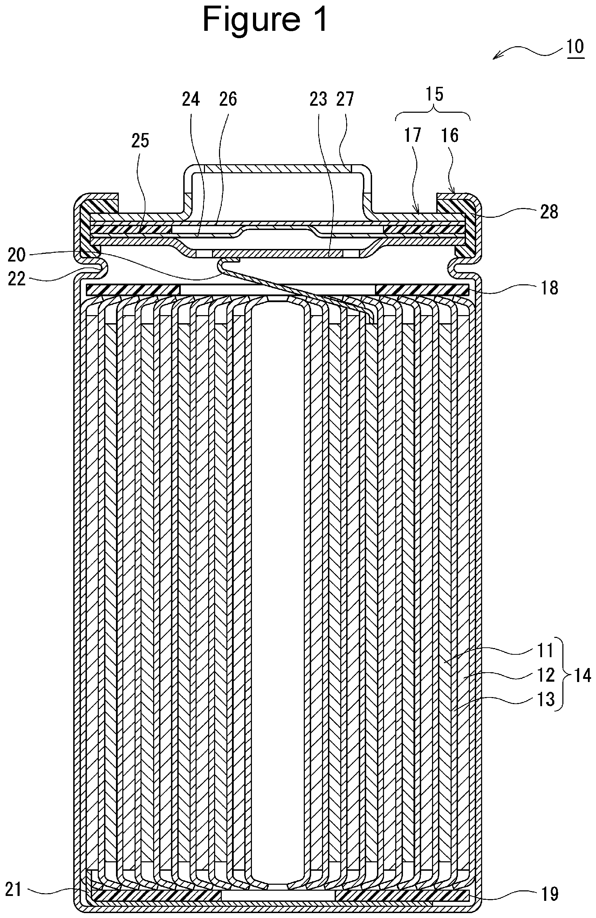

FIG. 1 is a cross-sectional view of a non-aqueous electrolyte secondary battery as an example of the embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 that houses the above-described members. The battery case 15 includes a bottomed cylindrical case body 16, and a sealing assembly 17 that closes an opening of the case body 16. Instead of the wound electrode assembly 14, another form of electrode assembly such as a stacked electrode assembly formed by alternately stacking positive electrodes and negative electrodes with a separator interposed therebetween may be applied. Examples of the battery case 15 include a metal exterior can having a cylindrical shape, a rectangular shape, a coin shape, a button shape, or the like, and a pouch exterior package formed by laminating a resin sheet and a metal sheet.

The case body 16 is, for example, a bottomed cylindrical metal exterior can. A gasket 28 is provided between the case body 16 and the sealing assembly 17 to ensure sealability of the inside of the battery. The case body 16 has, for example, a projecting portion 22 supporting the sealing assembly 17, and a part of a side face of the case body 16 projects inward to form the projecting portion 22. The projecting portion 22 is preferably formed in an annular shape along the circumferential direction of the case body 16, and supports the sealing assembly 17 on the upper face thereof.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at the central portions of respective members, and the insulating member 25 is interposed between the peripheral parts of respective members. When the internal pressure of the non-aqueous electrolyte secondary battery 10 increases due to heat generated by an internal short circuit or the like, the lower vent member 24 deforms so as to push up the upper vent member 26 toward the cap 27 and breaks, and the current path between the lower vent member 24 and the upper vent member 26 is cut off, for example. When the internal pressure further increases, the upper vent member 26 breaks, and the gas is discharged from an opening of the cap 27.

In the non-aqueous electrolyte secondary battery 10 illustrated in FIG. 1, a positive electrode lead 20 attached to the positive electrode 11 extends to the sealing assembly 17 side through the through hole of the insulating plate 18, and a negative electrode lead 21 attached to the negative electrode 12 extends to the bottom side of the case body 16 through the outside of the insulating plate 19. The positive electrode lead 20 is connected to a lower face of the filter 23 which is a bottom plate of the sealing assembly 17 by welding or the like, and the cap 27 which is a top plate of the sealing assembly 17 electrically connected to the filter 23 serves as a positive electrode terminal. The negative electrode lead 21 is connected to the inner face of the bottom of the case body 16 by welding or the like, and the case body 16 serves as a negative electrode terminal.

Hereinafter, each component of the non-aqueous electrolyte secondary battery 10 will be described in detail.

[Positive Electrode]

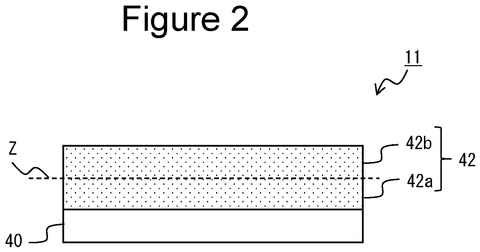

FIG. 2 is a cross-sectional view of a positive electrode which is an example of the embodiment. The positive electrode 11 includes a positive electrode current collector 40 and a positive electrode mixture layer 42 provided on the positive electrode current collector 40. A foil of a metal which is stable in the potential range of the positive electrode 11, such as aluminum, a film in which the metal is disposed on a surface layer thereof, or the like can be used for the positive electrode current collector 40. The positive electrode mixture layer 42 contains a positive electrode active material, and preferably further contains a binder, a conductive agent, and the like.

The positive electrode 11 is produced, for example, by applying a positive electrode mixture slurry containing a positive electrode active material, a binder, a conductive agent, and the like onto the positive electrode current collector 40, drying the slurry to form the positive electrode mixture layer 42, and then rolling the positive electrode mixture layer 42 with a rolling roller or the like. The method for producing the positive electrode mixture layer 42 will be described later in detail.

In the present embodiment, when the positive electrode mixture layer 42 illustrated in FIG. 2 is divided into two equal parts in the thickness direction of the positive electrode mixture layer 42, the dibutyl phthalate oil absorption of the positive electrode active material contained in a lower half region 42a is smaller than the dibutyl phthalate oil absorption of the positive electrode active material contained in an upper half region 42b. Here, the phrase "dividing the positive electrode mixture layer 42 into two equal parts in the thickness direction of the positive electrode mixture layer 42" means that, when the layering direction of the positive electrode current collector 40 and the positive electrode mixture layer 42 is defined as the thickness direction of the positive electrode mixture layer 42, the positive electrode mixture layer 42 is divided into two equal parts at an intermediate Z of the thickness of the positive electrode mixture layer 42. Even when the positive electrode mixture layer 42 is formed on both faces of the positive electrode current collector 40, among two regions obtained by dividing the positive electrode mixture layer 42 into two equal parts in the thickness direction, a region on the positive electrode current collector 40 side is defined as the lower half region 42a, and a region on the surface side of the positive electrode mixture layer 42 located away from the positive electrode current collector 40 is defined as the upper half region 42b.

In the present embodiment, the dibutyl phthalate oil absorption of the positive electrode active material contained in the lower half region 42a is greater than or equal to 11 mL/100 g and less than or equal to 19 mL/100 g, and the dibutyl phthalate oil absorption of the positive electrode active material contained in the upper half region 42b is greater than or equal to 15 mL/100 g and less than or equal to 23 mL/100 g. The value of the dibutyl phthalate oil absorption of the positive electrode active material contained in each region is an average value. That is, each region may contain a plurality of positive electrode active materials having different dibutyl phthalate oil absorptions. For example, when the lower half region 42a contains three types of positive electrode active materials (P1, P2, P3) having different dibutyl phthalate oil absorptions, the dibutyl phthalate oil absorption of the positive electrode active material contained in the lower half region 42a is the dibutyl phthalate oil absorption of a mixture including the positive electrode active materials P1, P2, and P3. The same applies to the upper half region 42b.

When the lower half region 42a contains a plurality of positive electrode active materials having different dibutyl phthalate oil absorptions, the dibutyl phthalate oil absorptions of all the positive electrode active materials are desirably greater than or equal to 11 mL/100 g and less than or equal to 19 mL/100 g. However, when the dibutyl phthalate oil absorption of a mixture including the plurality of positive electrode active materials contained in the lower half region 42a satisfies greater than or equal to 11 mL/100 g and less than or equal to 19 mL/100 g, the dibutyl phthalate oil absorption of each of the positive electrode active materials does not necessarily satisfy the above range. For example, when the lower half region 42a contains two types of positive electrode active materials (P1, P2) having different dibutyl phthalate oil absorptions, if the dibutyl phthalate oil absorption of a mixture including the positive electrode active materials P1 and P2 is greater than or equal to 11 mL/100 g and less than or equal to 19 mL/100 g, the dibutyl phthalate oil absorption of the positive electrode active material P1 may be, for example, less than 11 mL/100 g, and the dibutyl phthalate oil absorption of the positive electrode active material P2 may be, for example, more than 19 mL/100 g. In this case, it is necessary to adjust the contents of the positive electrode active materials P1 and P2 so that the dibutyl phthalate oil absorption of the mixture including the positive electrode active materials P1 and P2 is greater than or equal to 11 mL/100 g and less than or equal to 19 mL/100 g.

Similarly, when the upper half region 42b contains a plurality of positive electrode active materials having different dibutyl phthalate oil absorptions, the dibutyl phthalate oil absorptions of all the positive electrode active materials are desirably greater than or equal to 15 mL/100 g and less than or equal to 23 mL/100 g. However, when the dibutyl phthalate oil absorption of a mixture including the plurality of positive electrode active materials contained in the upper half region 42b satisfies greater than or equal to 15 mL/100 g and less than or equal to 23 mL/100 g, the dibutyl phthalate oil absorption of each of the positive electrode active materials does not necessarily satisfy the above range. For example, when the upper half region 42b contains two types of positive electrode active materials (P1, P2) having different dibutyl phthalate oil absorptions, if the dibutyl phthalate oil absorption of a mixture including the positive electrode active materials P1 and P2 is greater than or equal to 15 mL/100 g and less than or equal to 23 mL/100 g, the dibutyl phthalate oil absorption of the positive electrode active material P1 may be, for example, less than 15 mL/100 g, and the dibutyl phthalate oil absorption of the positive electrode active material P2 may be, for example, more than 23 mL/100. In this case, it is necessary to adjust the contents of the positive electrode active materials P1 and P2 so that the dibutyl phthalate oil absorption of the mixture including the positive electrode active materials P1 and P2 is greater than or equal to 15 mL/100 g and less than or equal to 23 mL/100 g.

The dibutyl phthalate oil absorption of the positive electrode active material is a value measured in accordance with the dibutyl phthalate (DBP) absorption A method (mechanical method) defined in JIS K-6217-4 "Carbon black for rubber-fundamental characteristics-part 4: determination of DBP absorption". Specifically, DBP is added to a sample (positive electrode active material) stirred by two blades at a constant speed using an absorption tester (manufactured by Asahi Souken Co., Ltd., model "S-500"), a change in viscosity characteristic at this time is detected by a torque detector, an output thereof is converted into torque by a microcomputer, and DBP corresponding to a torque at 100% of a generated maximum torque is converted per 100 g of the sample (positive electrode active material) to obtain a dibutyl phthalate oil absorption.

In the present embodiment, it is presumed that the permeability of the non-aqueous electrolyte into the positive electrode mixture layer 42 is enhanced and the diffusion resistance is suppressed by the upper half region 42b containing the positive electrode active material having a dibutyl phthalate oil absorption higher than that of the positive electrode active material in the lower half region 42a, and having an oil absorption amount of greater than or equal to 11 mL/100 g and less than or equal to 19 mL/100 g. Thus, the discharge rate characteristics of the non-aqueous electrolyte secondary battery are improved. Further, it is presumed that the retention amount of the non-aqueous electrolyte in the positive electrode mixture layer 42 is appropriately maintained by the lower half region 42b containing the positive electrode active material having a dibutyl phthalate oil absorption lower than that of the positive electrode active material in the upper half region 42b and having an oil absorption amount of greater than or equal to 15 mL/100 g and less than or equal to 23 mL/100 g, so that the decomposition reaction of the non-aqueous electrolyte associated with charge and discharge is suppressed. Thus, the charge-discharge cycle characteristics of the non-aqueous electrolyte secondary battery are improved.

The lower limit of the dibutyl phthalate oil absorption of the positive electrode active material contained in the lower half region 42a is preferably greater than or equal to 12 mL/100 g, more preferably greater than or equal to 13 mL/100 g, and the upper limit thereof is preferably less than or equal to 18 mL/100 g, more preferably less than or equal to 17 mL/100 g, in terms of improving charge-discharge cycle characteristics, for example. The lower limit of the dibutyl phthalate oil absorption of the positive electrode active material contained in the upper half region 42b is preferably greater than or equal to 16 mL/100 g and more preferably greater than or equal to 17 mL/100 g, and the upper limit thereof is preferably less than or equal to 22 mL/100 g and more preferably less than or equal to 21 mL/100 g, in terms of improving discharge rate characteristics, for example.

Examples of the positive electrode active material include lithium-metal composite oxides containing transition metal elements such as Co, Mn, and Ni. Examples of the lithium-metal composite oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (M; at least one of Na, Mg, Sc, Y, Mn, Fe, Co, Ni, Cu, Zn, Al, Cr, Pb, Sb, and B, $0 < x \leq 1.2$, $0 < y \leq 0.9$, $2.0 \leq z \leq 2.3$). These may be independently used, or two or more thereof may be used in combination. The positive electrode active material preferably contains a lithium-nickel composite oxide such as $Li_xNiO_2$, $Li_xCo_yNi_{1-y}O_2$, or $Li_xNi_{1-y}M_yO_z$ (M; at least one of Na, Mg, Sc, Y, Mn, Fe, Co, Ni, Cu, Zn, Al, Cr, Pb, Sb, and B, $0 < x \leq 1.2$, $0 < y \leq 0.9$, $2.0 \leq z \leq 2.3$) from the viewpoint of achieving increase in the capacity of the non-aqueous electrolyte secondary battery.

The positive electrode active material is obtained, for example, by mixing a precursor and a lithium compound, and firing the mixture. The precursor is obtained, for example, by adding dropwise an alkali solution such as a sodium hydroxide solution to a solution containing metal salts of one or more metals such as transition metals while stirring the solution, adjusting the pH of the solution to the alkali side (for example, 8.5 to 11.5) to precipitate (coprecipitate) a metal hydroxide, and subjecting the precipitated metal hydroxide to heat treatment. Then, by adjusting the heat treatment temperature, the heat treatment time, and the like in the heat treatment, precursors having different dibutyl phthalate oil absorptions are obtained, and eventually, positive electrode active materials having different dibutyl phthalate oil absorptions are obtained.

Examples of the conductive agent include carbon particles such as carbon black (CB), acetylene black (AB), Ketjen black, carbon nanotube (CNT), and graphite. These may be independently used, or two or more thereof may be used in combination.

Examples of the binder include fluorine-based resin such as polytetrafluoroethylene (PTFE) or polyvinylidene fluoride (PVdF), polyacrylonitrile (PAN), polyimide-based resin, acrylic resin, and polyolefin-based resin. These may be independently used, or two or more thereof may be used in combination.

An example of a method for producing the positive electrode mixture layer 42 will be described. For example, a positive electrode active material having a dibutyl phthalate oil absorption of greater than or equal to 11 mL/100 g and less than or equal to 19 mL/100 g, a binder, a conductive agent, and the like are mixed together with a solvent to prepare a positive electrode mixture slurry for the lower half region 42a. In addition, separately from the slurry, a positive electrode active material having a dibutyl phthalate oil absorption of greater than or equal to 15 mL/100 g and less than or equal to 23 mL/100 g, a binder, a conductive agent, and the like are mixed together with a solvent to prepare a positive electrode mixture slurry for the upper half region 42b. Then, the positive electrode mixture slurry for the lower half region 42a is applied onto both faces of the positive electrode current collector 40 and dried, and then the positive electrode mixture slurry for the upper half region 42b is applied onto the coated film of the positive electrode mixture slurry for the lower half region 42a and dried, whereby the positive electrode mixture layer 42 can be formed. In the above method, the positive electrode mixture slurry for the lower half region 42a is applied and dried, and then the positive electrode mixture slurry for the upper half region 42b is applied thereon. Alternatively, the positive electrode mixture slurry for the lower half region 42a is applied, and then the positive electrode mixture slurry for the upper half region 42b may be applied before drying, or the positive electrode mixture slurry for the lower half region 42a and the positive electrode mixture slurry for the upper half region 42b may be simultaneously applied.

[Negative Electrode]

The negative electrode 12 includes a negative electrode current collector and a negative electrode mixture layer provided on the negative electrode current collector. For example, a foil of a metal which is stable within the potential range of the negative electrode, such as copper, a film in which the metal is disposed on a surface layer thereof, or the like is used for the negative electrode current collector.

The negative electrode mixture layer contains a negative electrode active material, and preferably further contains a binder, a conductive agent, and the like. The negative electrode 12 can be produced, for example, by preparing a negative electrode mixture slurry containing a negative electrode active material, a binder, and the like, applying the negative electrode mixture slurry onto a negative electrode current collector, drying the slurry to form a negative electrode mixture layer, and rolling the negative electrode mixture layer.

The negative electrode active material is capable of reversibly absorbing and releasing lithium ions, and examples thereof include carbon materials such as natural graphite and artificial graphite; metals alloyed with lithium, such as silicon (Si) and tin (Sn); alloys containing metal elements such as Si and Sn; and composite oxides.

Examples of the binder include fluorine-based resin, PAN, polyimide-based resin, acrylic resin, polyolefin-based resin, styrene-butadiene rubber (SBR), carboxymethyl cellulose (CMC) or a salt thereof, polyacrylic acid (PAA) or a salt thereof (PAA-Na, PAA-K, and the like, and a partially neutralized salt thereof may be used), and polyvinyl alcohol (PVA). These may be independently used, or two or more thereof may be used in combination.

Examples of the conductive agent include carbon particles such as carbon black (CB), acetylene black (AB), Ketjen black, carbon nanotube (CNT), and graphite. These may be independently used, or two or more thereof may be used in combination.

[Separator]

A porous sheet having ion permeability and insulation properties is used as the separator 13, for example. Specific examples of the porous sheet include a fine porous thin film, a woven fabric, and a nonwoven fabric. As material of the separator, olefin-based resin such as polyethylene or polypropylene, cellulose, or the like is suitable. The separator 13 may be a layered body having a cellulose fiber layer and a fiber layer of thermoplastic resin such as olefin-based resin. In addition, the separator 13 may be a multilayer separator having a polyethylene layer and a polypropylene layer, and a separator having a surface coated with a material such as aramid-based resin or ceramic may be used.

[Non-Aqueous Electrolyte]

The non-aqueous electrolyte contains a non-aqueous solvent and an electrolyte salt dissolved in the non-aqueous solvent. Examples of the non-aqueous solvent that can be used include esters, ethers, nitriles such as acetonitrile, amides such as dimethylformamide, and mixed solvents of two or more types thereof. The non-aqueous solvent may contain a halogen-substituted compound in which at least a part of hydrogen in these solvents is substituted with a halogen atom such as fluorine.

Examples of the esters include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone and γ-valerolactone; and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted compound, it is preferable to use a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6, n is 1 or 2), $LiB_{10}Cl_{10}$, $LiCl$, $LiBr$, $LiI$, chloroborane lithium, lower aliphatic lithium carboxylate, borates such as $Li_2B_4O_7$ and $Li(B(C_2O_4)F_2)$, and imide salts such as $LiN(SO_2CF_3)_2$ and $LiN(CiF_{2l+1}SO_2)(C_mF_{2m+1}SO_2)$ {l and m are each an integer of 1 or more}. These lithium salts may be independently used, or two or more thereof may be used in combination. Among them, $LiPF_6$ is preferably used from the viewpoint of ion conductivity, electrochemical stability, and the like. The concentration of the lithium salt is preferably 0.8 to 1.8 mol per 1 L of the solvent.

EXAMPLES

Hereinafter, the present disclosure will be further described with reference to examples, but the present disclosure is not limited to these examples.

(Preparation of Lithium-Metal Composite Oxide A)

A precursor obtained by preparing a nickel-cobalt-aluminum composite hydroxide by coprecipitation and then subjecting the nickel-cobalt-aluminum composite hydroxide to heat treatment, and lithium hydroxide monohydrate (Li-OH·H$_2$O) were mixed such that the atomic ratio among lithium, nickel, cobalt, and aluminum was Li : Ni : Co : Al = 1.00 : 0.82 : 0.15 : 0.03. The mixed powder was fired at 750°C for 15 hours in an electric furnace under an oxygen atmosphere to obtain a lithium-metal composite oxide A.

(Preparation of Lithium-Metal Composite Oxides B to J)

The lithium-metal composite oxides B to J were prepared under the same conditions as for the lithium-metal composite oxide A except that the heat treatment temperature and the heating time in the heat treatment of the nickel-cobalt-aluminum composite hydroxide were changed.

Table 1 summarizes the dibutyl phthalate oil absorptions of the lithium-metal composite oxides A to J. The method for measuring the dibutyl phthalate oil absorption is as described above.

[Table 1]

|  | Dibutyl phthalate oil absorption (mL/100g) |
|---|---|
| Lithium-metal composite oxide A | 9.8 |
| Lithium-metal composite oxide B | 11.0 |
| Lithium-metal composite oxide C | 12.5 |
| Lithium-metal composite oxide D | 15.0 |
| Lithium-metal composite oxide E | 19.0 |
| Lithium-metal composite oxide F | 20.0 |
| Lithium-metal composite oxide G | 21.2 |
| Lithium-metal composite oxide H | 23.0 |
| Lithium-metal composite oxide I | 24.2 |
| Lithium-metal composite oxide J | 13.8 |

<Example 1>

[Production of Positive Electrode]

In an N-methylpyrrolidone (NMP) solvent, the lithium-metal composite oxide B as a positive electrode active material, acetylene black as a conductive agent, and polyvinylidene fluoride (PVDF) having an average molecular weight of 1,100,000, as a binder, were mixed at a mass ratio of 98 : 1 : 1 to prepare a slurry having a solid content of 70 mass%. This was used as a positive electrode mixture slurry for the lower half region.

In addition, in an N-methylpyrrolidone (NMP) solvent, the lithium-metal composite oxide G as a positive electrode active material, acetylene black as a conductive agent, and polyvinylidene fluoride (PVDF) having an average molecular weight of 1,100,000, as a binder, were mixed at a mass ratio of 98 : 1 : 1 to prepare a slurry having a solid content of 70 mass%. This was used as a positive electrode mixture slurry for the upper half region.

The positive electrode mixture slurry for the lower half region was applied to both faces of an aluminum foil having a thickness of 15 $\mu$m, then the positive electrode mixture slurry for the upper half region was applied thereon with the same thickness, then dried, and rolled with a rolling roller to prepare a positive electrode including a positive electrode mixture layer formed on both faces of a positive electrode current collector.

[Production of Negative Electrode]

First, 95 parts by mass of graphite powder, 5 parts by mass of Si oxide, and 1 part by mass of carboxymethyl cellulose (CMC) were mixed together with an appropriate amount of water. To this mixture, 1.2 parts by mass of styrene-butadiene rubber (SBR) and an appropriate amount of water were added to prepare a negative electrode mixture slurry. The negative electrode mixture slurry was applied to both faces of a copper foil having a thickness of 8 $\mu$m, and then the coated film was dried and rolled with a rolling roller to prepare a negative electrode including a negative electrode mixture layer formed on both faces of a negative electrode current collector.

[Preparation of Non-Aqueous Electrolyte]

To 100 parts by mass of a mixed solvent composed of ethylene carbonate (EC) and methylethyl carbonate (MEC) (EC : DMC = 1 : 3 at a volume ratio), 5 parts by mass of vinylene carbonate (VC) was added, and LiPF$_6$ was dissolved therein at a concentration of 1 mol/L. This was used as a non-aqueous electrolyte.

[Production of Secondary Battery]

(1) A lead was attached to each of the positive electrode and the negative electrode, and then the positive electrode and the negative electrode were wound with a polyethylene separator having a thickness of 20 $\mu$m interposed therebetween, to produce a wound electrode assembly.

(2) The electrode assembly was inserted into a case body, the lead on the negative electrode side was welded to the bottom of the case body, and the lead on the positive electrode side was welded to a sealing assembly.

(3) The non-aqueous electrolyte was injected into the case body, and then the opening end of the case body was crimped to the sealing assembly with a gasket interposed therebetween. This was subjected to non-aqueous electrolysis to obtain a secondary battery.

<Example 2>

A non-aqueous electrolyte secondary battery was produced in the same manner as in Example 1 except that the lithium-metal composite oxide C was used as a positive electrode active material used for the positive electrode mixture slurry for the lower half region.

<Example 3>

A non-aqueous electrolyte secondary battery was produced in the same manner as in Example 1 except that the lithium-metal composite oxide E was used as a positive electrode active material used for the positive electrode mixture slurry for the lower half region.

<Example 4>

A non-aqueous electrolyte secondary battery was produced in the same manner as in Example 1 except that the lithium-metal composite oxide C was used as a positive electrode active material used for the positive electrode mixture slurry for the lower half region and the lithium-metal composite oxide D was used as a positive electrode active material used for the positive electrode mixture slurry for the upper half region.

<Example 5>

A non-aqueous electrolyte secondary battery was produced in the same manner as in Example 1 except that the lithium-metal composite oxide C was used as a positive electrode active material used for the positive electrode mixture slurry for the lower half region and the lithium-metal composite oxide H was used as a positive electrode active material used for the positive electrode mixture slurry for the upper half region.

<Comparative Example 1>

A non-aqueous electrolyte secondary battery was produced in the same manner as in Example 1 except that the lithium-metal composite oxide A was used as a positive electrode active material used for the positive electrode mixture slurry for the lower half region.

<Comparative Example 2>

A non-aqueous electrolyte secondary battery was produced in the same manner as in Example 1 except that the lithium-metal composite oxide F was used as a positive electrode active material used for the positive electrode mixture slurry for the lower half region.

<Comparative Example 3>

A non-aqueous electrolyte secondary battery was produced in the same manner as in Example 1 except that the lithium-metal composite oxide C was used as a positive electrode active material used for the positive electrode mixture slurry for the lower half region and the lithium-metal composite oxide J was used as a positive electrode active material used for the positive electrode mixture slurry for the upper half region.

<Comparative Example 4>

A non-aqueous electrolyte secondary battery was produced in the same manner as in Example 1 except that the lithium-metal composite oxide C was used as a positive electrode active material used for the positive electrode mixture slurry for the lower half region and the lithium-metal composite oxide I was used as a positive electrode active material used for the positive electrode mixture slurry for the upper half region.

<Comparative Example 5>

A non-aqueous electrolyte secondary battery was produced in the same manner as in Example 1 except that the lithium-metal composite oxide E was used as a positive electrode active material used for the positive electrode mixture slurry for the lower half region and the lithium-metal composite oxide D was used as a positive electrode active material used for the positive electrode mixture slurry for the upper half region.

[Evaluation of discharge rate characteristics]

Each of the non-aqueous electrolyte secondary batteries of Examples and Comparative Examples was charged at a constant current of 0.7 It under a temperature environment of 25°C until the voltage reached 4.2 V, and then charged at a constant voltage of 4.2 V until the current reached 0.05 It. The battery was then discharged at a constant current of 0.7 It until the voltage reached 2.5 V
After the charge and discharge was performed, the battery was charged at a constant current value of 0.2 It until the voltage reached 4.2 V, and then charged at a constant voltage of 4.2 V until the current reached 0.05 It. Then, the battery was discharged at a constant current of 0.2 It until the voltage reached 2.5 V, and the discharge current at this time was measured. This was defined as a 0.2 It discharge capacity. Subsequently, the battery was charged at a constant current value of 0.2 It until the voltage reached 4.2 V, and then charged at a constant voltage of 4.2 V until the current reached 0.05 It. Then, the battery was discharged at a constant current of 1.0 It until the voltage reached 2.5 V, and the discharge current at this time was measured. This was defined as a 1.0 It discharge capacity. Then, the discharge rate characteristics were obtained by the following formula.

$$\text{Discharge rate characteristics } (\%) = (1.0 \text{ It discharge capacity}/0.2 \text{ It discharge}$$

$$\text{capacity}) \times 100$$

[Evaluation of Charge-Discharge Cycle Characteristics]

Each of the non-aqueous electrolyte secondary batteries of Examples and Comparative Examples after evaluation of discharge rate characteristics was charged at a constant current of 0.7 It under a temperature environment of 25°C until the voltage reached 4.2 V, and then charged at a constant voltage of 4.2 V until the current reached 0.05 It. The battery was then discharged at a constant current of 0.7 It until the voltage reached 2.5 V This charge-discharge cycle was defined as 1 cycle, 300 cycles were performed, and the capacity retention rate was determined by the following formula.

$$\text{Capacity retention rate } (\%) = (\text{discharge capacity at 300th cycle/discharge capacity}$$

$$\text{at 1st cycle}) \times 100$$

Table 2 summarizes the results of the discharge rate characteristics and the charge-discharge cycle characteristics of Examples and Comparative Examples.

[Table 2]

| | Dibutyl phthalate oil absorption of positive electrode active material (mL/100g) | | Discharge rate characteristics | Capacity retention rate |
|---|---|---|---|---|
| | Lower half region | Upper half region | | |
| Example 1 | 11.0 | 21.2 | 85.4% | 92.1% |
| Example 2 | 12.5 | 21.2 | 90.0% | 91.0% |
| Example 3 | 19.0 | 21.2 | 91.2% | 86.8% |
| Example 4 | 12.5 | 15.0 | 85.4% | 92.1% |
| Example 5 | 12.5 | 23.0 | 91.2% | 86.8% |
| Comparative Example 1 | 9.8 | 21.2 | 82.2% | 92.1% |
| Comparative Example 2 | 20.0 | 21.2 | 92.1% | 78.7% |
| Comparative Example 3 | 12.5 | 13.8 | 79.9% | 92.9% |
| Comparative Example 4 | 12.5 | 24.2 | 91.2% | 82.2% |
| Comparative Example 5 | 19.0 | 15.0 | 84.8% | 84.9% |

In all of Examples 1 to 5, both the discharge rate characteristics and the capacity retention rate in the charge-discharge cycle showed a value greater than or equal to 85%. On the other hand, in Comparative Examples 1 to 4, any one of the discharge rate characteristics and the capacity retention rate in the charge-discharge cycle showed a value lower than 85%, and in Comparative Example 5, both the discharge rate characteristics and the capacity retention rate in the charge-discharge cycle showed a value lower than 85%. These results show that, as in Examples 1 to 5, the discharge rate characteristics and the charge-discharge cycle characteristics can be improved by using a positive electrode for a non-aqueous electrolyte secondary battery in which the dibutyl phthalate oil absorption of a positive electrode active material contained in a lower half region of a positive electrode mixture layer is smaller than the dibutyl phthalate oil absorption of a positive electrode active material contained in an upper half region, the dibutyl phthalate oil absorption of the positive electrode active material contained in the lower half region is greater than or equal to 11 mL/100 g and less than or equal to 19 mL/100 g, and the dibutyl phthalate oil absorption of the positive electrode active material contained in the upper half region is greater than or equal to 15 mL/100 g and less than or equal to 23 mL/100 g.

REFERENCE SIGNS LIST

| 10 | Non-aqueous electrolyte secondary battery |
|---|---|
| 11 | Positive electrode |
| 12 | Negative electrode |
| 13 | Separator |
| 14 | Electrode assembly |
| 15 | Battery case |
| 16 | Case body |
| 17 | Sealing assembly |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |
| 40 | Positive electrode current collector |
| 42 | Positive electrode mixture layer |
| 42a | Upper half region |
| 42b | Lower half region |

**Claims**

1. A positive electrode for a non-aqueous electrolyte secondary battery, comprising:

   a positive electrode current collector; and a positive electrode mixture layer provided on the positive electrode current collector and containing a positive electrode active material, wherein when the positive electrode mixture layer is divided into two equal parts in a thickness direction of the positive electrode mixture layer, a dibutyl phthalate oil absorption of the positive electrode active material contained in a lower half region on a side of the positive electrode current collector is smaller than a dibutyl phthalate oil absorption of the positive electrode active material contained in an upper half region on a surface side of the positive electrode mixture layer, the dibutyl phthalate oil absorption of the positive electrode active material contained in the lower half region is greater than or equal to 11 mL/100 g and less than or equal to 19 mL/100 g, and the dibutyl phthalate oil absorption of the positive electrode active material contained in the upper half region is greater than or equal to 15 mL/100 g and less than or equal to 23 mL/100 g.

2. A non-aqueous electrolyte secondary battery comprising:

   a positive electrode; a negative electrode; and a non-aqueous electrolyte,
   wherein the positive electrode is the positive electrode for a non-aqueous electrolyte secondary battery according to claim 1.

# Figure 1

# Figure 2

## INTERNATIONAL SEARCH REPORT

| International application No. |
| --- |
| **PCT/JP2021/041885** |

**A. CLASSIFICATION OF SUBJECT MATTER**

*H01M 4/13*(2010.01)i
FI:  H01M4/13

According to International Patent Classification (IPC) or to both national classification and IPC

**B. FIELDS SEARCHED**

Minimum documentation searched (classification system followed by classification symbols)

H01M4/13

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-45815 A (TOYOTA MOTOR CORP.) 22 March 2018 (2018-03-22) | 1-2 |
| A | JP 2016-100241 A (TOYOTA MOTOR CORP.) 30 May 2016 (2016-05-30) | 1-2 |
| A | JP 2007-095534 A (MATSUSHITA ELECTRIC IND. CO., LTD.) 12 April 2007 (2007-04-12) | 1-2 |
| A | JP 2017-16804 A (TOYOTA MOTOR CORP.) 19 January 2017 (2017-01-19) | 1-2 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/041885**

| Patent document cited in search report | | | Publication date (day/month/year) | Patent family member(s) | | | Publication date (day/month/year) |
|---|---|---|---|---|---|---|---|
| JP | 2018-45815 | A | 22 March 2018 | US | 2018/0076450 | A1 | |
| | | | | CN | 107819155 | A | |
| JP | 2016-100241 | A | 30 May 2016 | (Family: none) | | | |
| JP | 2007-095534 | A | 12 April 2007 | (Family: none) | | | |
| JP | 2017-16804 | A | 19 January 2017 | (Family: none) | | | |

Form PCT/ISA/210 (patent family annex) (January 2015)

**REFERENCES CITED IN THE DESCRIPTION**

**Patent documents cited in the description**

- JP 2016100241 A
- JP 2005515465 A